Europäisches Patentamt

European Patent Office

Office européen des brevets

(19)

(11) Publication number: **0 023 421**
**B1**

(12) **EUROPEAN PATENT SPECIFICATION**

(45) Date of publication of patent specification: **21.03.84**

(51) Int. Cl.³: **G 02 F 1/133,** G 09 F 9/35

(21) Application number: **80302534.5**

(22) Date of filing: **24.07.80**

(54) **Liquid crystal display device.**

(30) Priority: **27.07.79 JP 94944/79**

(43) Date of publication of application:
**04.02.81 Bulletin 81/5**

(45) Publication of the grant of the patent:
**21.03.84 Bulletin 84/12**

(84) Designated Contracting States:
**CH DE FR GB IT LI NL**

(56) References cited:
**CH - A - 555 578**
**DE - A - 2 402 749**
**DE - A - 2 541 522**
**DE - A - 2 837 431**
**US - A - 3 569 614**

**PATENT ABSTRACTS OF JAPAN, unexamined
applications, E Section, Vol.2, No. 68, May 24,
1978 The Patent Office Japanese Government,
page 2547 E 78**

(73) Proprietor: **Stanley Electric Co., Ltd.**
**2-9-13, Nakameguro**
**Meguro-ku Tokyo (JP)**

(72) Inventor: **Wada, Masanobu**
**No. 8-22 Kamisugi 5-chome**
**Sendai-shi Miyagi-ken (JP)**
Inventor: **Uchida, Tatsuo**
**No. 21-15 Icho-machi**
**Sendai-shi Miyagi-ken (JP)**
Inventor: **Teshima, Toru**
**No. 4606-4, Motoishikawa-cho Midori-ku**
**Yokohama-shi Kanagawa-ken (JP)**

(74) Representative: **Harrison, David Christopher et al,**
**MEWBURN ELLIS & CO 2/3 Cursitor Street**
**London EC4A 1BQ (GB)**

Liquid crystal display device

The present invention relates to a TN (twisted nematic) type or a guest-host type liquid crystal display device, using a mixture of a pleochroic dye as a guest material and a liquid crystal as a host material. More particularly, it pertains to a liquid crystal display device which can effect a display of a coloured image whose colour or colours is or are different from that colour or colours which is or are exhibited due to the orientation of the liquid crystal and the pleochroic dye themselves contained in the display cell, either when a voltage is applied or when none is applied.

As one way for permitting a TN type or guest-host type of liquid crystal device to effect a display of a coloured pattern or image whose colour or colours is or are different from that colour or colours which is or are exhibited due to orientation of the liquid crystal and the pleochroic dye themselves, there has been proposed heretofore the use of a coloured filter attached to the outer surface of a transparent substrate of the liquid crystal cell. For example, where a liquid crystal device is arranged so that one can see a pattern in black due to light absorption when no voltage is applied, while the same appears transparent upon application of a voltage, the use of a coloured filter in the manner mentioned above permits the display device to effect a display of a coloured pattern because the colour or colours of the filter appear through the cell when a voltage is applied.

The display device having a coloured filter attached to the outer surface of a rear substrate of the cell has the disadvantage that, owing to the thickness which the filter-carrying substrate has, when one views the front side of the display device obliquely the margin of the filter and/or the colour of the adjacently located pattern will be visible.

US—A—3569614 achieves a coloured display by the use of external filter strips, and DE—A—2402749 achieves colouration of a display by using transparent electrodes, in strip form, which are aligned on one of the walls of the cell with respective strips of a tri-colour colour plate. Character electrodes are on the other wall of the cell, spaced from the colour plate by the width of the cell.

Japanese Patent Preliminary Publication No. Sho 53-35498 which was laid open on April 1, 1978 discloses a liquid crystal display device intended for a display of a coloured image, which device uses a glass substrate having a metal film formed, by evaporation, on its inner surface and having electrodes formed on this metal film. The use of such metal film formed by evaporation of the metal in vacuo as disclosed therein makes it difficult to use colour to discriminate or indicate fine portions of a pattern. Moreover, the use of such metal film as a colourant of the electrodes encounters limitations in the type of the electrode-forming materials which can be employed, and often results in an increase in loss of light rays passing through the device. In this method it is only possible to apply a single coloured material so as to correspond to the pattern of the electrode or to the background zone located outside said pattern of electrode and it is hardly possible to achieve a display of a complicated multi-coloured pattern.

It is a primary object of the present invention to provide an improved liquid crystal display device which is capable of making a display of a bi- or multi-coloured pattern (hereinafter referred to for convenience as "multi-coloured") and which obviates the disadvantages mentioned above encountered in the prior art, by forming a light-transmitting coloured film directly over and covering at least one of said electrodes formed on said substrate. The electrodes and the film are formed on the same side of the substrate.

The term "light-transmitting film" includes a translucent film as well as a transparent one.

Two embodiments of the invention will now be described with reference to the accompanying drawings, wherein:

Fig. 1 is a diagrammatic sectional view of a first embodiment, wherein a liquid crystal material having a positive dielectric anisotropy is used to serve as a host material in a guest-host device, and

Fig. 2 is a diagrammatic sectional view of a second embodiment wherein a twisted-nematic liquid material is used in the display cell.

Like parts are indicated by like reference numerals and symbols throughout the drawings.

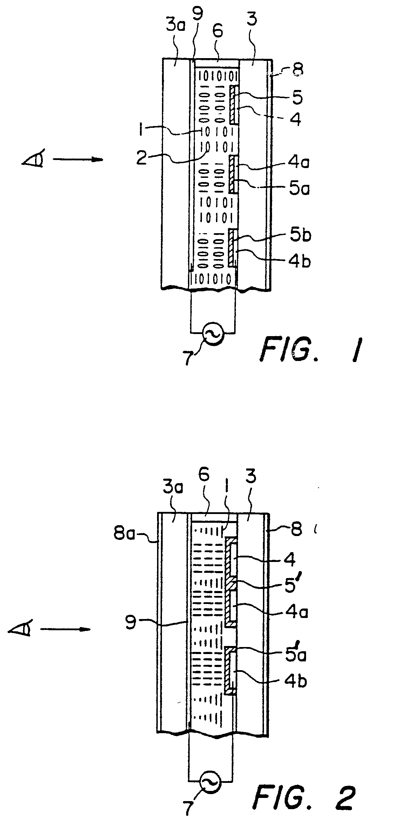

In the first embodiment shown in Fig. 1 a liquid crystal 1 having a positive dielectric anisotropy is used as a host material in the guest-host type display device. Transparent electrodes 4, 4a and 4b and 9 are adherently formed on the inner surfaces of rear and front transparent substrates 3 and 3a, respectively, which are the front and rear walls of the cell, disposed in parallel with each other. Transparent electrodes 4, 4a and 4b formed on the inner surface of the rear substrate 3 are coated at their surfaces with coloured filter films 5, 5a and 5b, respectively. Liquid crystal 1 and pleochroic dye 2 are introduced into a space formed between the rear and front substrates 3 and 3a, and they are sealed with a spacer 6 to close the cell. A polarizer 8 is attached to the outer surface of the rear substrate 3 so as to make a clear display when a voltage is applied, and a dark display when this voltage is removed. The coloured filter films 5, 5a and 5b may be formed by, for example, printing on the surfaces of the electrodes, using a solution of a dye prepared by dissolving the dye in a cellulosic binding agent.

The surfaces are then rubbed to achieve a desired orientation of the molecules of the liquid crystal when no voltage is applied. A black dichroic dye may be used in the cell, for example, for a liquid crystal having a positive dielectric anisotropy (thereby a homogenous orientation is obtained). When no voltage is applied, the optical axis of the dye is oriented parallel with the plane of the substrate, i.e. normal to the direction of one's observation of the front side of the display device, so that the front side is seen as black due to the maximum light absorption by the dye. The colour of the film cannot be observed, because light is absorbed by the black dye. When a voltage is applied, the optical axis of the dye is oriented approximately in a direction parallel to the direction of the applied electric field (the direction of observation of the front side of the device), so that the portions sandwiched between the electrodes become very clear due to the minimum light absorption, and the corresponding portions on the front side are viewed to be in the colour of the coloured filters. In other words, a display of a coloured pattern on a black background is achieved.

In the second embodiment shown in Fig. 2, a liquid crystal cell of the TN type is used. Coloured filters 5', and 5'a are formed in the same manner as described in connection with the first embodiment of Fig. 1, except that a green-coloured filter 5' and a red-coloured filter 5'a are applied in this case, and the former straddles continuously two electrodes 4 and 4a. After the formation of the filters, rubbing is conducted to achieve a desired orientation of the molecules of liquid crystal when no voltage is applied. A liquid crystal having a positive dielectric anisotropy is placed in the space defined between the substrates 3 and 3a, and sealed with a spacer 6 to produce a display cell of the TN type. Polarizers 8 and 8a are fixed on the outer surfaces of substrates 3 and 3a, respectively, in a manner that both polarizing planes of these two polarizers are positioned parallel to each other. With this arrangement, the cell works so as to appear black when no voltage is applied, and clear in those portions sandwiched between the electrodes when a voltage is applied. In other words, the display device can effect a display of an image which is multi-coloured in the colours of the filters on the black background when a voltage is applied.

The above-stated embodiments illustrate the use of a liquid crystal having a positive dielectric anisotropy in the display cell. Alternatively, a liquid crystal having a negative dielectric anisotropy may be used in the display devices of the present invention. For example, transparent electrodes may be formed on a substrate, and thereafter they are subjected to a known treatment, have a further layer deposited on them, for causing an orientation of the molecules of the liquid crystal in a direction perpendicular to the plane of the substrate when no voltage is applied. These treatments are conducted after the application of the coloured filters to the electrodes. Display devices having similar arrangements to those shown in Figs. 1 and 2 are thus constructed. The molecules of the liquid crystal sandwiched between the electrodes are oriented in a direction parallel to the plane of the substrate when a voltage is applied across the electrodes. Consequently, the display device can effect a display of a multicoloured image in a mixed or mingled colour of the colour of the dye and the colour(s) of the filters when a voltage is applied, while it is viewed clear in the colour(s) of the filter when the voltage is removed.

These liquid crystal display devices eliminate dual presentation of marginal portions of the clear pattern corresponding to the transparent electrodes and the pattern of the image having the colour of the filter when looked at an angle relative to the front side of the device, because the electrodes are in intimate contact with the filter. The method for producing the display device form making a multi-coloured pattern according to the present invention makes it possible clearly to indicate fine portions of a pattern by colour and to make a display of a clear multi-coloured pattern.

Coloured materials which can be used for the coloured filter films should be chemically inert to the liquid crystals and to the dyes which are contained in the display cell. For example, dyes such as Rose Bengal (red) and Patent Blue and water-soluble inks may be used. The coloured filter may be produced by printing with a solution of PVA (polyvinyl alcohol) containing these colour materials. The use of such a printing method makes it possible to form fine patterns easily. The coloured filter film may also have the function of causing a specific orientation of adjacent molecules of the liquid crystal. Alternatively, the evaporation of colour materials in vacuo may be relied upon for the formation of coloured filter films. A useful colour material is an azo dye which is chemically stable.

The coloured film or layer extends at least partly over the portion of the substrate surface covered by the electrode(s). In the first embodiment the electrodes and coloured films are coextensive and in the second embodiment the coloured films extend over a greater area than the electrodes.

## Claims

1. A twisted nematic or guest-host liquid crystal coloured display device having transparent image electrodes formed directly on a substrate with a coloured light-transmitting film on the same substrate, characterised in that the coloured light-transmitting film (5, 5a, 5b, 5', 5'a) is formed directly over and covers at least one of said electrodes (4, 4a, 4b) formed on said substrate.

2. A display device according to Claim 1, wherein the substrate (3) has some areas (5', 5'a) covered by respective portions of the said film, the film portions being different in colour from one another.

3. A display device according to Claim 1 or Claim 2, wherein at least one portion of the said film (5') extends to be common to at least two of the electrodes (4, 4a).

4. A display device according to any one of the preceding Claims, wherein the substrate is a transparent wall (3) of the liquid crystal cell having parallel walls (3, 3a).

5. A display device according to Claim 4, wherein one or both of said walls bears additionally a polarizing layer (8, 8a).

## Revendications

1. Un dispositif d'affichage à cristal liquide du type nématique en hélice ou donneur-receveur, des électrodes d'images transparentes étant formées directement sur un substrat avec un film coloré transmettant la lumière sur le même substrat, caractérisé en ce que le film coloré transmettant la lumière (5, 5a, 5b, 5', 5'a) est formé directement au dessus et recouvre au moins l'une desdites électrodes (4, 4a, 4b) formées sur ledit substrat.

2. Un dispositif d'affichage selon la revendication 1, dans lequel certaines zones (5', 5'a) du substrat (3) sont recouvertes par des parties respectives dudit film, les parties de film étant de couleurs différentes l'une par rapport à l'autre.

3. Un dispositif d'affichage selon la revendication 1 ou 2, dans lequel au moins une partie dudit film (5') s'étend de manière à être commune à au moins deux des électrodes (4, 4a).

4. Un dispositif d'affichage selon l'une quelconque des revendications précédentes dans lequel le substrat est une paroi transparente (3) de la cellule de cristal liquide ayant des parois parallèles (3, 3a).

5. Un dispositif d'affichage selon la revendication 4, dans lequel au moins l'une desdites parois est recouverte d'une couche polarisante (8, 8a) supplémentaire.

## Patentansprüche

1. Torsionsnematische oder Gast-Wirt-Flüssigkristallfarbanzeigevorrichtung mit unmittelbar auf einem Substrat ausgebildeten transparenten Bildelektroden und einem farbigen, lichtdurchlässigen Film auf demselben Substrat, dadurch gekennzeichnet, daß der farbige, lichtdurchlässige Film (5, 5a, 5b, 5', 5'a) unmittelbar über mindestens einer der auf dem Substrat ausgebildeten Elektroden (4, 4a, 4b) diese bedeckend ausgebildet ist.

2. Anzeigevorrichtung nach Anspruch 1, bei der einige Bereiche (5', 5'a) des Substrats (3) durch entsprechende Bereiche des Films bedeckt sind, wobei die Filmbereiche untereinander von verschiedener Farbe sind.

3. Anzeigevorrichtung nach Anspruch 1 oder Anspruch 2, bei der sich wenigstens ein Bereich des Films (5') derart erstreckt, daß er mindestens zwei der Elektroden (4, 4a) gemeinsam ist.

4. Anzeigevorrichtung nach einem der vorhergehenden Ansprüche, bei der das Substrat eine transparente Wand (3) der parallele Wände (3, 3a) aufweisenden Flüssigkristallzelle ist.

5. Anzeigevorrichtung nach Anspruch 4, bei der eine oder beide der Wände zusätzlich eine polarisierende Schicht (8, 8a) tragen.

FIG. 1

FIG. 2